# DEMANDE DE BREVET EUROPEEN

(11) **EP 4 806 690 A2**
(43) Date de publication de la demande: **16.09.2026**
(21) Numéro de dépôt: 26163421.6
(22) Date de dépôt: 09.03.2026
(51) Int. Cl.: B60K 11/04, B60K 11/08, B62D 35/02, B62D 37/02, B62D 25/08, B60K 1/00

(54) **AGENCEMENT D'UNE PARTIE AVANT D'UN VÉHICULE POURVU D'UN DISPOSITIF DE TRAITEMENT AÉRODYNAMIQUE**

(30) Priorité: 13.03.2025 FR 2502512
(71) Demandeur: Renault s.a.s, 92100 Boulogne Billancourt (FR)
(72) Inventeur: DELICOURT, Antoine, 91940 COURTABOEUF (FR); JOHAN, Alexandre, 91940 COURTABOEUF (FR)

(57) **Abrégé**

L'invention concerne un agencement (1) d'une partie avant de véhicule (10) automobile comportant un bouclier (11) et un capot (12) prolongeant le bouclier, un pare-brise (17) prolongeant le capot, et un compartiment (13) en partie délimité par le capot (12), le bouclier comportant une ouverture d'entrée d'air. Le compartiment comprend un canal aéraulique destiné à la circulation d'un air de refroidissement, une extrémité avant du canal coopérant avec l'ouverture d'entrée d'air du bouclier et une extrémité opposée du canal coopérant avec une ouverture de sortie d'air (2) ménagée au niveau d'une partie sommitale arrière du capot (12), notamment au niveau d'un diffuseur d'air (20) délimitant la partie sommitale du capot (12). La normale à l'ouverture de sortie d'air (2) est d'orientation sensiblement verticale de telle sorte que l'air entrant par le bouclier (11) et évacué par l'ouverture de sortie d'air (2) selon une direction sensiblement verticale orientée vers le haut.

## Description

### Domaine technique de l'invention

L'invention est du domaine des systèmes d'amélioration du comportement dynamique d'un véhicule qui peuvent être conjugués à un système de régulation thermique. L'invention a plus particulièrement pour objet un agencement d'une partie avant de véhicule automobile qui améliore la gestion du flux d'air entrant dans le véhicule afin d'améliorer la tenue dynamique du véhicule et de réduire la trainée aérodynamique. L'invention porte aussi sur un véhicule électrique comprenant un tel agencement.

### Etat de la technique antérieure

La majorité des véhicules comprennent des dispositifs de refroidissement qui requièrent une circulation d'air de refroidissement afin de gérer thermiquement les différents systèmes embarqués. A titre d'exemple, il est connu que le bouclier avant d'un véhicule comprenne au moins une ouverture au travers de laquelle l'air est apte à circuler afin de traverser des échangeurs thermiques de telle sorte que le fluide circulant dans les échangeurs soit refroidi par l'air. De manière générale, l'air ayant traversé les échangeurs est ensuite évacué au travers de passages d'air reliés au compartiment avant dans lequel sont disposés les échangeurs, de tels passages pouvant notamment être les passages de roues avant.

Outre les perturbations engendrées par un tel écoulement d'air qui tendent à modifier le comportement dynamique du véhicule, l'air entrant dans le compartiment avant augmente le coefficient de pénétration dans l'air du véhicule notamment du fait des chemins d'évacuation à suivre pour sortir du compartiment. Il est connu en tant que perturbation aérodynamique, le décollement de l'air circulant le long de la caisse, du carénage inférieur sous caisse de sorte que l'appui du véhicule, donc sa tenue de route, peut être insuffisant. Il a aussi été constaté que le décollement de l'air sur le parebrise créé des dépressurisations qui engendrent un fonctionnement dégradé du système de balayage du pare-brise en cas de pluie.

Une telle situation devient incompatible pour un véhicule qui est voué à un usage sportif, ou tout du moins requiert une tenue de route améliorée par rapport aux véhicules jusqu'à présent fabriqués.

L'objet de l'invention tend à apporter une solution à ces inconvénients.

### Présentation de l'invention

Le but de l'invention est de proposer un agencement d'une partie avant de véhicule automobile comportant un bouclier et un capot prolongeant le bouclier, un pare-brise prolongeant le capot, et un compartiment en partie délimité par le capot, le bouclier comportant une ouverture d'entrée d'air.

De manière particulière, le compartiment comprend un canal aéraulique destiné à la circulation d'un air de refroidissement, une extrémité avant du canal coopérant avec l'ouverture d'entrée d'air du bouclier et une extrémité opposée du canal coopérant avec une ouverture de sortie d'air ménagée au niveau d'une partie sommitale arrière du capot, notamment au niveau d'un diffuseur d'air délimitant la partie sommitale du capot. Selon l'invention, la normale à l'ouverture de sortie d'air est d'orientation sensiblement inclinée verticalement, notamment d'orientation sensiblement parallèle au pare-brise, de telle sorte que l'air entrant par le bouclier est évacué par l'ouverture de sortie d'air selon une direction sensiblement orientée vers le haut du véhicule.

Il est remarquable de constater qu'une telle conception tend à réduire à la fois la trainée aérodynamique du véhicule et les pressions aérauliques sur le pare-brise. Une telle conception, du fait de l'inclinaison du canal à l'intérieur du compartiment, tant à augmenter la portance négative du véhicule, donc sa tenue de route.

Compte tenu du fait que la sortie d'air est d'orientation sensiblement orientée vers le haut, à l'avant du pare-brise, la zone du pare-brise susceptible d'être balayée par des essuie-glaces est soumise à une pression d'air plus faible ce qui évite tout décollement d'air et tend à améliorer le balayage et la trainée aérodynamique.

### Résumé de l'invention

Selon un mode de réalisation de l'invention, le capot comprend un diffuseur d'air dont une face supérieure s'étend de manière sensiblement parallèle à un plan défini par une partie supérieure du capot. Le diffuseur pourrait être fixé sous le capot, notamment être rapporté contre la face intérieure du capot. Le diffuseur est préférentiellement disposé au prolongement du canal évoluant le long de la position centrale du véhicule, l'air sortant vers l'extérieur du canal d'écoulement d'air est ainsi avantageusement canalisé au niveau d'une partie médiane du véhicule, donc du parebrise, ce qui répartit de manière homogène le flux d'air sortant sur le véhicule, notamment le parebrise.

Selon l'invention, le diffuseur présente un profil sensiblement plan qui s'étend de manière sensiblement parallèle à une face supérieure du capot.

L'agencement objet de l'invention peut comprendre les caractéristiques suivantes prises séparément ou en combinaison entre elles :
- le canal aéraulique comprend un module de refroidissement, un divergent situé à l'avant du module de refroidissement, le divergent s'étendant notamment entre l'ouverture d'entrée d'air et le module de refroidissement, un convergent situé à l'arrière du module de refroidissement, le convergent s'étendant notamment entre le module de refroidissement et l'ouverture de sortie d'air ;
- l'air circulant au travers du canal aéraulique est destiné à l'échange thermique avec des systèmes de régulation thermique comportant notamment un radiateur et/ou un condenseur ;
- le canal aéraulique est incliné vers le haut, le canal aéraulique évoluant notamment entre une partie inférieure avant du compartiment délimitée par l'ouverture du bouclier et une partie supérieure arrière du compartiment délimitée par l'ouverture de capot ;
- le canal aéraulique s'étend notamment de manière sensiblement symétrique à l'axe médian du véhicule ;
- l'ouverture est disposée à l'avant du pare-brise, le capot comprenant l'ouverture qui est située à proximité d'une partie centrale arrière du capot de telle sorte que l'écoulement de l'air au travers du compartiment est destiné à venir pour partie en appui le long du pare-brise afin de diminuer les pressions sur le pare-brise ;
- l'agencement comprend un diffuseur d'air, notamment assemblé au capot, le diffuseur d'air étant apte à être en relation fluidique avec le canal aéraulique, le diffuseur d'air comportant une paroi extérieure s'étendant en saillie hors d'une face extérieure du capot, notamment selon un axe sensiblement vertical, et une paroi intérieure s'étendant en saillie hors d'une face intérieure du capot, notamment selon un axe sensiblement vertical, de telle sorte que les parois extérieure et intérieure sont concentriques de telle sorte qu'elles délimitent l'ouverture qui est notamment apte à recevoir une grille ;
- la paroi intérieure du diffuseur a pour partie un profil assujetti à l'extrémité libre du convergent contre lequel la paroi intérieure est destinée à venir en appui lorsque le capot est en position de fermeture ;
- le capot comprend un corps structurant dont la géométrie de la partie centrale arrière est de type d'un créneau au travers duquel est logé le diffuseur d'air, le créneau étant formé d'un bord arrière segmenté du capot comprenant des portions transversales sensiblement rectilignes ;
- le créneau du capot est délimité par des portions inclinées vers l'extérieur et reliées l'une à l'autre par une portion centrale d'axe transversal écarté du pare-brise, l'écart entre la portion centrale et le pare-brise étant notamment d'au moins un quart de la longueur du capot ;
- une portion inférieure du pare-brise est recouverte d'un enjoliveur s'étendant transversalement et reliant des montants latéraux de baie entre eux de telle sorte que les portions inclinées délimitant des portions latérales du capot et le diffuseur d'air s'étendent directement au prolongement longitudinal de l'enjoliveur de pare-brise, et que le diffuseur d'air, notamment le bord arrière du diffuseur d'air, est directement disposé transversalement au prolongement des portions latérales, notamment du bord arrière des portions latérales, de manière à former une continuité de ligne transversale ;
- une ailette transversale est disposée en saillie verticale hors du capot ou du diffuseur d'air, l'ailette s'étendant dans un plan sensiblement parallèle à la face extérieure du capot qui lui est périphérique de telle sorte que le coefficient de pénétration dans l'air du véhicule est réduit ;
- l'écoulement d'air s'effectuant avec un décollement réduit sur le parebrise ;
- l'ailette est disposée à l'avant de l'ouverture ;
- l'ailette est approximativement située en partie médiane du capot selon l'axe longitudinal ;
- le diffuseur d'air comprend l'ailette ;
- le module de refroidissement est incliné vers l'avant du véhicule de telle sorte qu'un bord supérieur du module de refroidissement est décalé vers l'avant d'un bord inférieur du module de refroidissement ;
- le module de refroidissement comprend au moins un échangeur thermique avec l'air et un groupe moto-ventilateur ;
- l'agencement comprend une lame aérodynamique inférieure, qui est verticalement espacée du bouclier, créant une deuxième ouverture d'entrée d'air et une deuxième sortie d'air destinée à un écoulement d'air sous caisse du véhicule, notamment le long d'un carénage sous caisse s'étendant pour partie sous le compartiment ;
- la deuxième ouverture est centrale et est disposée sensiblement au droit de l'ouverture d'entrée d'air de refroidissement par rapport à un axe vertical ;
- une lame aérodynamique inférieure, qui est verticalement espacée du bouclier, créant au moins une troisième ouverture d'entrée d'air et une troisième sortie d'air destinée au refroidissement du système de freinage associé à une roue avant ;
- le capot et/ou le diffuseur d'air est réalisé en matière composite, notamment en fibre de carbone .

L'invention concerne également un véhicule, notamment de type à propulsion électrique, comprenant l'agencement susmentionnés.

### Présentation des figures

Ces objets, caractéristiques et avantages de la présente invention seront exposés en détail dans la description suivante d'un mode de réalisation et de variantes faites à titre non-limitatif en relation avec les figures jointes parmi lesquelles :
- la [FIG.1] est une vue schématique d'une partie avant du véhicule selon l'invention ;
- la [FIG.2] est une vue schématique partielle d'une coupe longitudinale de la partie avant d'un véhicule de la [Fig.1].

### Description détaillée

Par convention dans la description ci-après, la direction selon laquelle le véhicule automobile se déplace en ligne droite est définie comme étant la direction longitudinale X. La direction perpendiculaire à la direction longitudinale et située dans un plan parallèle au sol est nommée direction transversale Y. La direction Y0 s'inscrit dans le plan médian au véhicule. La direction perpendiculaire aux directions longitudinale et transversale est nommée direction verticale Z, qui est aussi la direction perpendiculaire au sol sur lequel se déplace un véhicule automobile.

Les termes « avant » et « arrière » s'appliquent dans leur sens usuel, relativement à la direction longitudinale, et les termes « au-dessus » et « au-dessous » sont utilisés en référence à la direction verticale Z. Les termes « premier » et « deuxième » ont vocation à distinguer des composants similaires et non à établir une hiérarchie entre eux au sein de l'invention.

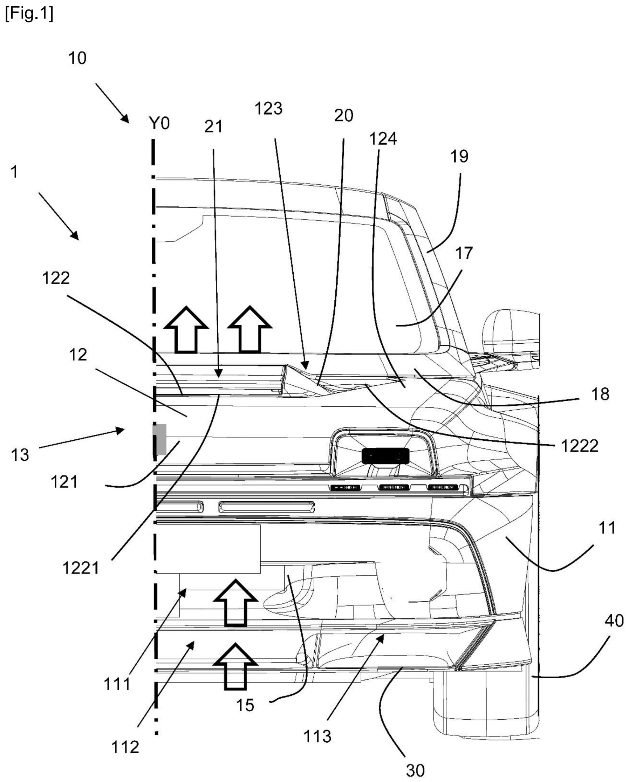

Sur la [Fig.1] est représentée de face la moitié gauche d'un véhicule 10, la partie avant du véhicule comprend un bouclier 11, prolongé vers l'arrière par un capot 12. Le capot 12 est prolongé vers l'arrière par un pare-brise 17 dont le contour comprend des montants latéraux 19 au niveau de ses bords droit et gauche, et un enjoliveur 18 en son bord inférieur.

La moitié droite du véhicule peut comprendre les caractéristiques de la moitié gauche, à la symétrie près.

Selon l'invention qui vise notamment l'arrangement 1 d'une partie avant de véhicule, le compartiment avant du véhicule est délimité en partie sommitale par un capot 12 dont la face avant s'étend dans un plan incliné vers l'arrière par rapport au plan YZ, et dont la face supérieure s'étend dans un plan incliné vers le haut par rapport à un plan XY. Le bouclier 11 comprend une ouverture 111, notamment une ouverture centrale. Le bouclier 11 est disposé au-dessous du capot 12, notamment au-dessous de la face avant du capot.

Le capot 12 peut comprendre un corps structurant 121. Il peut être réalisé en matériau composite, notamment en fibre de carbone.

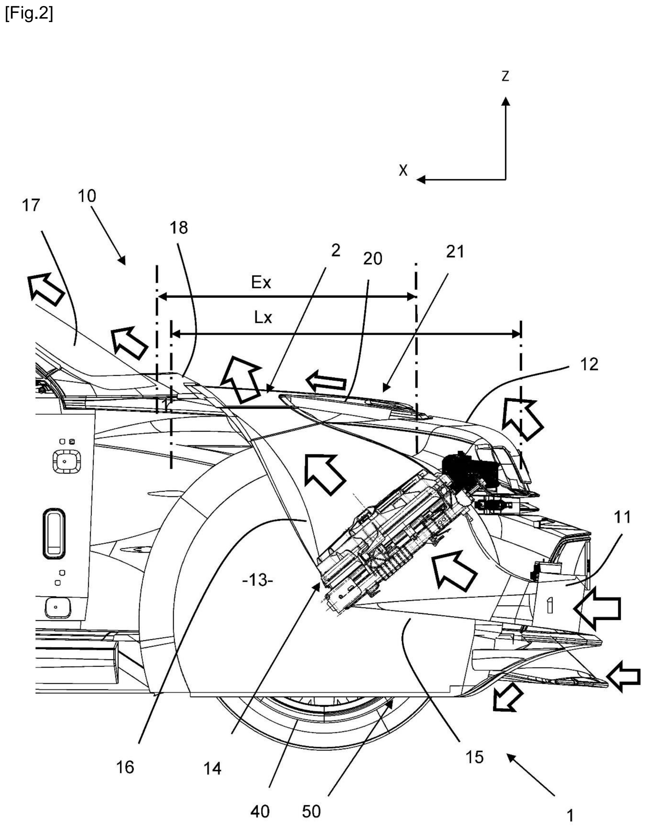

Selon un mode de réalisation, le capot 12 comprend une ouverture centrale ou une échancrure centrale de type d'un créneau 123 au travers de laquelle l'air entrant par le bouclier est évacuée hors du véhicule, après avoir traversé le compartiment 13. L'air entrant sensiblement à l'horizontal dans le bouclier 11 ressort hors du compartiment 13 de manière sensiblement horizontale, par le biais d'un guide d'air ou canal aéraulique qui sera détaillé par la suite en référence à la [FIG.2].

Le créneau 123 réalisé dans le capot 12 peut être formé d'un bord arrière 122 segmenté du capot comprenant des portions 1221 et 1222 transversales sensiblement rectilignes. De manière particulière, le bord arrière comprend des portions inclinés 1222 vers les côtés latéraux du capot, en allant de l'avant vers l'arrière du véhicule. Les portions inclinés 1222 sont reliés l'un à l'autre par l'intermédiaire d'un segment central 1221. Selon une direction longitudinale X, le segment central 1221 est écarté du pare-brise 17 d'un écart « Ex », qui peut être supérieur à la moitié de la longueur « Lx » du capot 12, préférentiellement d'un écart « Ex » qui est supérieur au deux tiers de la longueur « Lx » du capo.

Selon un axe transversal Y, le capot 12 comprend des portions latérales 124 entre lesquelles s'étend le diffuseur d'air 20 au travers duquel l'ouverture 2 de sortie d'air est réalisée. Le diffuseur d'air 20 peut être réalisé en matière composite, notamment en fibre de carbone. Il comprend une base avec une ouverture 2 et une ailette 21 destinée à améliorer l'écoulement de l'air le long du pare-brise 17.

Selon une variante de réalisation, le diffuseur d'air 20 est distinct du capot 12 en ce sens que l'ouverture du capot n'entraine pas le déplacement du diffuseur.

Le diffuseur d'air 20 comprend une base sensiblement plane au travers de laquelle l'ouverture 2 de sortie d'air est réalisée. La base du diffuseur 20 s'étend dans un plan sensiblement parallèle à la face extérieure du capot, tout en étant disposée en saillie hors du capot. La base est d'inclinaison évolutive vers le haut en allant de l'avant vers l'arrière du véhicule. Une telle inclinaison contribue à créer une rampe de guidage d'air en amont de l'ouverture 2. La partie arrière du diffuseur d'air comprend une zone sommitale plus haute de la partie sommitale de l'avant de la base. Le caractère saillant du diffuseur 20 confère une personnalisation forte au traitement aérodynamique du véhicule.

La partie arrière du diffuseur 20 reprend sensiblement le profil de l'enjoliveur 18 de sorte à créer une continuité de ligne entre le diffuseur 20 et l'enjoliveur 18, ce qui favorise l'écoulement de l'air en sortie de l'ouverture 2, notamment le long de l'enjoliveur 18. Sur la [FIG.2], le compartiment 13 comprend un guide intérieur d'air ou canal aéraulique qui est situé en partie centrale du véhicule, tout en étant incliné vers le haut, en allant de l'avant vers l'arrière du véhicule de telle sorte que l'ouverture d'entrée d'air 111 est situé verticalement plus bas que l'ouverture 2 de sortie d'air. Le canal aéraulique peut être constitué d'un convergent 16 et d'un divergent 15 qui sont respectivement à l'interface d'un module de refroidissement 14. Ce dernier peut comprendre au moins un échangeur thermique, notamment un radiateur ou un condenseur. Le module de refroidissement 14 est d'encombrement réduit en hauteur du fait de sa disposition d'inclinaison vers l'avant du véhicule de telle sorte que son bord supérieur est à l'avant de son bord inférieur. L'angle d'inclinaison par rapport à l'axe vertical Z peut être compris entre 30° et 60°, préférentiellement de 45°.

Selon le sens d'écoulement du fluide le long du canal aéraulique, le divergent 15 relié à l'ouverture 111 d'entrée d'air du bouclier 11 coopère par son extrémité opposée avec le module de refroidissement 14, notamment son bord périphérique. Le convergent 16 relié à l'ouverture 2 de sortie d'air du diffuseur 20 coopère par son extrémité opposée avec le module de refroidissement 14, notamment son bord périphérique. Préférentiellement, la surface de l'ouverture 111 d'entrée d'air est approximativement identique à la surface de l'ouverture 2 de sortie d'air. Préférentiellement encore, la normale à l'ouverture 2 de sortie d'air est sensiblement parallèle à l'axe vertical Z, voire incliné d'un angle compris entre 10° et 30°, notamment de 20°, vers l'arrière du véhicule. Le diffuseur 20 est disposé à l'avant du pare-brise 17, notamment à l'avant d'un enjoliveur 18 recouvrant un bord inférieur du pare-brise. L'enjoliveur 18 s'étend en saillie verticale hors d'une face supérieure du capot 12 de telle sorte qu'il contribue à guider l'air sortant de l'ouverture 2 selon une direction sensiblement parallèle au pare-brise 17. La partie disposée à l'arrière de l'enjoliveur ne subit pas la pression de l'air de telle sorte que cette partie arrière de l'enjoliveur délimite avec le parebrise 17 une zone à pression atmosphérique dans laquelle les balais du système d'essuie-glace sont logés.

L'ailette 21 du diffuseur d'air 20 est localisé en amont de l'ouverture 2 de telle sorte qu'elle guide l'air le long du capot avant qu'il ne rencontre l'air sortant de l'ouverture 2. L'ailette 21 vise à orienter une partie de l'air contournant le capot 12 par l'extérieur vers le pare-brise de telle sorte que l'écoulement de l'air le long du pare-brise s'effectue sans décollement, ce qui tend à améliorer la trainée aérodynamique du véhicule.

En combinaison avec l'enjoliveur 18, le profil de l'ailette 21 contribue à ce que l'intégralité du pare-brise est arrosé par l'air selon une répartition homogène de la pression appliquée sur le pare-brise, ce qui tend à améliorer l'essuyage du parebrise, quelle que soit la vitesse de déplacement du véhicule.

Le traitement aérodynamique du véhicule passe également par la présence d'une lame 30 aérodynamique inférieure, qui est verticalement éloignée du bouclier 11, notamment pour partie. La lame 30 aérodynamique vise à créer un guide d'air comportant une deuxième ouverture 112 d'entrée d'air et une deuxième sortie d'air destiné à l'orientation de l'air sous le carénage du véhicule, notamment sous un carénage 50 du compartiment 13. La lame 30 aérodynamique peut en outre comprendre des troisièmes ouvertures 113 d'entrée d'air, notamment des ouvertures latérales afin permettre un écoulement d'air en direction d'une partie du système de freinage des roues avant 40.

Fort du traitement aérodynamique du véhicule opéré par des ouvertures particulières d'entrée et de sortie d'air, la trainée aérodynamique du véhicule est réduite, ce qui confère au véhicule des prestations dynamiques améliorées comparativement aux véhicules connus.

## Revendications

1. Agencement (1) d'une partie avant de véhicule (10) automobile comportant un bouclier (11) et un capot (12) prolongeant le bouclier, un pare-brise (17) prolongeant le capot, et un compartiment (13) en partie délimité par le capot (12), le bouclier comportant une ouverture d'entrée d'air (111), **caractérisé en ce que** le compartiment comprend un canal aéraulique destiné à la circulation d'un air de refroidissement, une extrémité avant du canal coopérant avec l'ouverture d'entrée d'air (111) du bouclier et une extrémité opposée du canal coopérant avec une ouverture de sortie d'air (2) ménagée au niveau d'une partie sommitale arrière du capot (12), notamment au niveau d'un diffuseur d'air (20) délimitant la partie sommitale du capot (12), la normale à l'ouverture de sortie d'air (2) est d'orientation sensiblement inclinée verticalement et sensiblement parallèle au pare-brise, de telle sorte que l'air entrant par le bouclier (11) est évacué par l'ouverture de sortie d'air (2) selon une direction sensiblement orientée vers le haut du véhicule.

2. Agencement (1) selon la revendication précédente, selon lequel le canal aéraulique comprend un module de refroidissement (14), un divergent (15) situé à l'avant du module de refroidissement, le divergent s'étendant notamment entre l'ouverture d'entrée d'air (111) et le module de refroidissement (14), un convergent (16) situé à l'arrière du module de refroidissement, le convergent s'étendant notamment entre le module de refroidissement et l'ouverture de sortie d'air (2).

3. Agencement (1) selon la revendication précédente, selon lequel le canal aéraulique est incliné vers le haut, le canal aéraulique évoluant notamment entre une partie inférieure avant du compartiment (13) délimitée par l'ouverture du bouclier (11) et une partie supérieure arrière du compartiment (13) délimitée par l'ouverture (2) de capot (12) ou de diffuseur (20).

4. Agencement (1) selon l'une des revendications précédentes, **caractérisé en ce qu'**il comprend un pare-brise (17) à l'avant duquel est disposé l'ouverture (2), le capot (12) comprenant l'ouverture (2) qui est située à proximité d'une partie centrale arrière du capot de telle sorte que l'écoulement de l'air au travers du compartiment (13) est destiné à venir pour partie en appui le long du pare-brise (17) afin de diminuer la pression sur le pare-brise.

5. Agencement (1) selon l'une des revendications précédentes, **caractérisé en ce qu'**il comprend un diffuseur d'air (20), notamment assemblé au capot (12), le diffuseur d'air étant en relation fluidique avec le canal aéraulique, le diffuseur d'air comportant une paroi extérieure s'étendant en saillie hors d'une face extérieure du capot, notamment selon un axe sensiblement vertical, et une paroi intérieure s'étendant en saillie hors d'une face intérieure du capot, notamment selon un axe sensiblement vertical, de telle sorte que les parois extérieure et intérieure sont concentriques de telle sorte qu'elles délimitent l'ouverture (2) qui est notamment apte à recevoir une grille.

6. Agencement (1) selon la revendication précédente, selon lequel le capot (12) comprend un corps structurant (121) dont la géométrie de la partie centrale arrière est de type d'un créneau (123) au travers duquel est logé le diffuseur d'air (20), le créneau étant formé d'un bord arrière (122) segmenté du capot comprenant des portions (1221, 1222) transversales sensiblement rectilignes.

7. Agencement (1) selon la revendication précédente, selon lequel le créneau (123) du capot est délimité par des portions inclinées (1222) vers l'extérieur et reliées l'une à l'autre par une portion centrale (1221) d'axe transversal écarté du pare-brise, l'écart (Ex) entre la portion centrale et le pare-brise étant notamment d'au moins un quart de la longueur (Lx) du capot.

8. Agencement (1) selon la revendication précédente, selon lequel une portion inférieure du pare-brise (17) est recouverte d'un enjoliveur (18) s'étendant transversalement et reliant des montants latéraux (19) de baie entre eux de telle sorte que les portions inclinées (1222) délimitant des portions latérales (124) du capot et le diffuseur d'air (20) s'étendent directement au prolongement longitudinal de l'enjoliveur de pare-brise, et que le diffuseur d'air (20) est directement disposé transversalement au prolongement des portions latérales (124), de manière à former une continuité de ligne transversale.

9. Agencement (1) selon l'une quelconque des revendications 5 à 8, selon lequel une ailette (21) transversale est disposée en saillie verticale hors du capot (12) ou du diffuseur d'air (20), l'ailette s'étendant dans un plan sensiblement parallèle à la face extérieure du capot qui lui est périphérique de telle sorte que le coefficient de pénétration dans l'air du véhicule (SCx) est réduit.

10. Agencement (1) selon l'une des revendications précédentes en combinaison avec la revendication 2, **caractérisé en ce que** le module de refroidissement (14) est incliné vers l'avant du véhicule de telle sorte qu'un bord supérieur du module de refroidissement (14) est décalé vers l'avant d'un bord inférieur du module de refroidissement (14).

11. Agencement (1) selon l'une des revendications précédentes, **caractérisé en ce qu'**il comprend une lame (30) aérodynamique inférieure, qui est verticalement espacée du bouclier (11), créant une deuxième ouverture d'entrée d'air (112) et une deuxième sortie d'air destinée à un écoulement d'air sous caisse du véhicule, notamment le long d'un carénage sous caisse s'étendant pour partie sous le compartiment (13).

12. Agencement selon l'une des revendications 5 à 11, selon lequel le capot (12) et/ou le diffuseur d'air (20) est réalisé en matière composite, notamment en fibre de carbone.

13. Véhicule (10), notamment de type à propulsion électrique, **caractérisé en ce qu'**il comprend l'agencement (1) selon l'une quelconque des revendications précédentes.
